# EUROPÄISCHE PATENTSCHRIFT

(11) **EP 2 437 085 B1**
(45) Veröffentlichungstag und Bekanntmachung des Hinweises auf die Patenterteilung: **13.12.2017**
(21) Anmeldenummer: 11182721.8
(22) Anmeldetag: 26.09.2011
(51) Int. Cl.: G02B 1/116, G02B 1/11, B29D 11/00

(54) **Verfahren zur Erzeugung einer antistatischen Beschichtung für eine Linse**
Method of production of an antistatic coating for a lens
Procédé de production d'un revêtement antistatique pour une lentille

(30) Priorität: 01.10.2010 DE 102010048089; 01.10.2010 US 388984 P
(43) Veröffentlichungstag der Anmeldung: 04.04.2012
(73) Patentinhaber: Carl Zeiss Vision International GmbH, 73430 Aalen (DE)
(72) Erfinder: Neuffer, Andreas, 71679 Asperg (DE)
(74) Vertreter: Witte, Weller & Partner Patentanwälte mbB

(56) Entgegenhaltungen:
- WO-A1-96/41215
- WO-A1-2010/113622
- US-A- 4 168 113
- US-A1- 2007 178 315
- MITCHELL D R G ET AL: "Atomic layer deposition of TiO2 and Al2O3 thin films and nanolaminates", SMART MATERIALS AND STRUCTURES, IOP PUBLISHING LTD., BRISTOL, GB, vol. 15, no. 1, 1 February 2006 (2006-02-01), pages S57-S64, XP020105297, ISSN: 0964-1726, DOI: 10.1088/0964-1726/15/1/010

## Beschreibung

Die vorliegende Erfindung betrifft ein Verfahren zur Erzeugung einer mehrere Schichten aufweisenden antistatischen Beschichtung für ein Linsenelement.

Antistatische Brillengläser sind im Stand der Technik bereits bekannt. Sie bieten den Vorteil, dass Schmutzpartikel aufgrund fehlender elektrostatischer Anziehungskräfte in geringerem Umfang an den Brillengläsern anhaften. Ohne eine antistatische Beschichtung verschmutzt ein Brillenglas schneller und muss daher öfter gereinigt werden. Des Weiteren lässt sich der Schmutz häufig schwierig entfernen. Daher wird üblicherweise bei der Beschichtung von Brillengläsern eine leitfähige und damit antistatische Schicht in die Beschichtung eingefügt. Bisher wurde hierzu eine einzelne Schicht in die Entspiegelungsbeschichtung des Brillenglases eingefügt.

Ein Beispiel für eine solche Beschichtung ist beispielsweise der Druckschrift US 2003/0179343 A1 zu entnehmen. Dort ist eine Beschichtung beschrieben, in der eine antistatische Schicht aus Indiumzinnoxid (ITO) mit einer bestimmten Dicke in die Entspiegelungsbeschichtung eingefügt ist. Das Einfügen einer solchen ITO-Schicht in die Entspiegelungsbeschichtung weist jedoch gewisse Nachteile wie höhere Kosten für die Beschichtung und eine Verschlechterung der mechanischen und optischen Eigenschaften der Entspiegelungsbeschichtung auf.

Weitere Beispiele für antistatische Beschichtungen sind etwa in den Druckschriften WO 96/41215 A1 und EP 2 416 183 A1 gezeigt, wobei letztere Stand der Technik nach Art. 54(3) EPÜ bildet. Ein weiterer Entspiegelungsschichtaufbau ist der Druckschrift US 2007/0178315 A1 zu entnehmen.

Es ist daher eine Aufgabe der vorliegenden Erfindung, eine antistatische Beschichtung für eine optische Linse, insbesondere ein Brillenglas, bereitzustellen, die sich einfach und kostengünstig in eine Entspiegelungsbeschichtung der optischen Linse integrieren lässt.

Daher wird eine Erfindung gemäß der beiliegenden Ansprüche bereitgestellt.

Gemäß einem ersten Aspekt der allgemeinen Offenbarung wird daher vorgeschlagen, dass die antistatische Wirkung durch zwei aneinander angrenzende Schichten bereitgestellt ist, wobei zumindest eine der zwei aneinander angrenzenden Schichten unterstöchiometrisch gebildet ist.

Gemäß einem zweiten Aspekt der allgemeinen Offenbarung wird vorgeschlagen, das eingangs genannte Verfahren dahingehend weiterzubilden, dass ein Aufbringen von zwei aneinander angrenzenden Schichten erfolgt, wobei die antistatische Wirkung durch die zwei aneinander angrenzenden Schichten bereitgestellt ist, und wobei zumindest eine der zwei aneinander angrenzenden Schichten unterstöchiometrisch gebildet wird.

Unter "unterstöchiometrisch" ist dabei zu verstehen, dass bei einem Aufbringen der entsprechenden Schicht ein Sauerstoffzufluss geringer gehalten wird, als er zur Erzielung eines stöchiometrischen Verhältnisses in der aufgebrachten Schicht notwendig ist. In der stöchiometrischen Schicht herrscht somit ein Sauerstoffmangel.

Auf diese Weise wird erfindungsgemäß die antistatische Wirkung nicht mittels einer einzigen Schicht aus leitfähigem Material erzielt, sondern aus einem Verbund von zwei Materialien, die bei geeigneter Prozessführung während des Aufbringens der Schichten eine leitfähige Zwischenschicht bzw. ein leitfähiges Interface erzeugen.

Als übliche Prozesse zur Herstellung solcher Schichten sind PVD (Physical Vapour Deposition), z.B. das Verdampfen fester Stoffe mittels eines Elektronenstrahls, Sputtern oder Arc-Verdampfen, sowie IBAD (Ion Beam Assisted Deposition) bekannt. Möglich sind aber auch alle anderen physikalischen Verdampfungsprozesse mit oder ohne Unterstützung von Ionen oder Plasma sowie chemische Prozesse wie CVD (Chemical Vapour Deposition) oder deren plasmaunterstützte Varianten wie PECVD (Plasma Enhanced Chemical Vapour Deposition) oder PICVD (Plasma Impulsed Vapour Deposition).

Indem eine der zwei aneinander angrenzenden Schichten unterstöchiometrisch ausgebildet ist und die zwei Schichten direkten Kontakt zueinander haben, kann sich eine leitende Grenzschicht zwischen beiden Schichten ausbilden. Durch die Leitfähigkeit dieser Grenzschicht wird eine antistatische Wirkung erzeugt. Wenn die Materialien der beiden aneinander angrenzenden Schichten ohnehin für Schichten der Entspiegelungsbeschichtung verwendet werden, kann auf diese Weise eine besonders einfache Integrierung einer antistatischen Wirkung in eine Entspiegelungsbeschichtung erfolgen.

Die eingangs gestellte Aufgabe wird somit vollkommen gelöst.

In einem bevorzugten Beispiel der optischen Linse ist vorgesehen, dass die zwei aneinander angrenzenden Schichten durch eine erste Schicht, die aus Titanoxid (TiO₂) hergestellt ist, und eine zweite Schicht, die aus Aluminiumoxid (Al₂O₃) hergestellt ist, bereitgestellt sind.

Bei den Materialien TiO₂ und Al₂O₃ handelt es sich um klassische Materialien zur Herstellung optischer Schichtsysteme. Insbesondere werden TiO₂ als hochbrechendes Material und Al₂O₃ als niedrigbrechendes Material aufgrund ihres hohen Transparenzgrades zur Herstellung von Entspiegelungsbeschichtungen von optischen Linsenelementen eingesetzt. Einzeln wirken diese Schichten wie übliche oxidische Schichten ohne eine wesentliche Leitfähigkeit. Im Verbund aber kann eine solche Beschichtung eine Leitfähigkeit aufweisen, die dann eine antistatische Wirkung hat.

Insbesondere ist dabei vorgesehen, dass die erste Schicht, d.h. die aus TiO₂ hergestellt Schicht, unterstöchiometrisch gebildet ist.

Die unterstöchiometrische Schichtzusammensetzung ergibt sich somit zu Ti_{>1}O_{<2} bzw. TiO_{2-y} . Mit anderen Worten ist die erste Schicht aus unterstöchiometrischem TiOₓ mit x < 2, wobei 1,66 < x < 2, hergestellt. Insbesondere kann die erste Schicht mit einem Sauerstoffanteil weniger als TiO₂ gebildet sein, insbesondere weniger als TiO_{1.95}; insbesondere weniger als TiO_{1.9}, insbesondere weniger als TiO_{1.85}; mit einem Sauerstoffanteil von mehr als TiO_{1,66}, insbesondere mehr als TiO_{1,7}; insbesondere mehr als TiO_{1,75}, insbesondere mehr als TiO_{1.85}. Die unterstöchiometrische Zusammensetzung der ersten Schicht ist zwischen TiO_{1,66} und TiO₂ gebildet; insbesondere ist sie zwischen TiO_{1,7} und TiO_{1.95} gebildet; insbesondere zwischen TiO_{1,75} und TiO_{1.9}; insbesondere zwischen TiO_{1,8} und TiO_{1.85}. Insbesondere kann die erste Schicht aus etwa TiO_{1,66}; TiO_{1,7}; TiO_{1,75}; TiO_{1,8}; TiO_{1,85}; TiO_{1,9}; TiO_{1,95}; TiO_{1,97} gebildet sein. Des Weiteren kann die erste Schicht auch zwischen TiO_{1,66} und TiO_{1,8} gebildet sein, sie kann auch zwischen TiO_{1,8} und TiO_{1,95} gebildet sein.

Die Aufbringung sowohl von TiO₂ als auch Al₂O₃ mit gewünschten Schichtendicken ist im Stand der Technik bekannt. Beispielsweise zeigt Druckschrift EP 1 284 302 B1 eine Möglichkeit zur Herstellung von TiO₂-Sputtertargets.

Um die erste, aus TiO₂ hergestellte Schicht bereitzustellen kann beispielsweise ein PVD-Verfahren angewendet werden. Die Substanz Ti₃O₅ wird dabei als übliche Ausgangssubstanz zur Erzeugung von TiO₂ benutzt. Zur Erreichung einer transparenten oxidischen TiO₂-Schicht wird normalerweise Sauerstoff während des Verdampfungsprozesses mit in die Verdampfungskammer eingelassen. Zusätzlich kann dieser Prozess mit Ionen unterstützt werden, um besonders hochbrechende und kompakte Schichten zu erreichen. Bei einer bestimmten Verdampfungsrate und einer bestimmten Sauerstoffmenge, die während der Verdampfung in den Verdampfungsraum mit eingelassen wird, wird normalerweise eine stöchiometrische Schicht, d.h. genau TiO₂, erzielt. Bei einem geringfügig kleineren Sauerstoffzufluss erhält man die oben beschriebene unterstöchiometrische Schicht mit dann Ti_{>1,0}O_{<2,0}.

Gemäß der Erfindung ist die erste Schicht nach der zweiten Schicht aufgebracht.

Dabei bezieht sich der Begriff "nach" auf die Reihenfolge der Aufbringung der Schichten auf das optische Linsenelement während des Aufbringungsprozesses. Bezeichnet man das Linsenelement im Querschnitt als unterste Schicht, ist eine nachfolgende Schicht somit weiter oben angeordnet.

Wird die erste, d.h. die TiO₂-Schicht, nach der zweiten, d.h. der Al₂O₃-Schicht, aufgebracht, muss darauf geachtet werden, dass anfänglich noch kein Sauerstoffüberschuss im Verdampfungsraum vorhanden ist, damit die TiO₂-Schicht unterstöchiometrisch bleibt und damit auch die Leitfähigkeit der TiO₂-Schicht erhalten bleibt. Daher bietet die umgekehrte Reihenfolge, d.h. das Aufbringen der Al₂O₃-Schicht, d.h. der zweiten Schicht, auf die TiO₂-Schicht, d.h. die erste Schicht, einen Vorteil, da nicht auf den Sauerstoffüberschuss im Verdampfungsraum geachtet werden muss.

Gemäß der Erfindung ist eine dritte Schicht, die aus TiO₂ hergestellt ist, auf die zweite Schicht aufgebracht. Es ergibt sich somit eine TiO₂-Al₂O₃-TiO₂-Beschichtung.

Des Weiteren ist vorgesehen, dass bei umgekehrter Aufbringung der ersten Schicht und der zweiten Schicht eine vierte Schicht, die aus Al₂O₃ hergestellt ist, auf die erste Schicht aufgebracht ist. Es ergibt sich dann somit eine Al₂O₃-TiO₂-Al₂O₃-Schicht.

Bei der Aufbringung der vierten Schicht muss dabei darauf geachtet werden, dass diese ohne zusätzlich in den Verdampfungsraum eingelassenen Sauerstoff und ohne Ionenunterstützung aufgedampft wird. Damit wird sichergestellt, dass in der Grenzschicht zwischen der unterstöchiometrischen TiO₂-Schicht und der Al₂O₃-Schicht, d.h. der ersten und der zweiten Schicht, kein zusätzlicher Sauerstoff eingebaut wird, der die Leitfähigkeit reduzieren bzw. unterbinden kann, indem sich die unterstöchiometrische TiO₂-Schicht in Richtung einer stöchiometrischen TiO₂-Schicht verändert.

Auch bei dem Verfahren gemäß der Erfindung ist vorgesehen, dass die zwei aneinander angrenzenden Schichten durch eine erste Schicht, die aus TiO₂ hergestellt ist, und eine zweite Schicht, die aus Al₂O₃ hergestellt ist, bereitgestellt sind. Die erste Schicht ist unterstöchiometrisch ausgebildet.

Des Weiteren ist die erste Schicht nach der zweiten Schicht aufgebracht.

Gemäß der Erfindung ist eine Schicht, die aus Al₂O₃ hergestellt ist, auf die erste Schicht aufgebracht. Es ist ist vorgesehen, dass diese Schicht ohne zusätzlichen Sauerstoff und ohne Ionenunterstützung aufgebracht wird.

Das Verfahren gemäß der Erfindung weist somit dieselben Vorteile wie die optische Linse gemäß dem Beispiel auf.

Üblicherweise erfolgt die Messung einer antistatischen Wirkung mit einem elektrischen Feldstärkemessgerät in einem definierten Abstand. Eine Entspiegelungsschicht ohne leitfähige Schicht erreicht nach Aufladung mittels eines geeigneten Materials, etwa eines Pinsels oder eines Tuchs, eine Feldstärke von mehreren Kilovolt (kV). Eine optische Linse mit einer Beschichtung mit antistatischer Wirkung bleibt bei einer solchen Aufladung deutlich unter einer Grenze von einem kV. Die hier vorgestellte antistatische Wirkung der Beschichtung besitzt eine so große Ableitfähigkeit, dass die Aufladung nahe Null bleibt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Querschnittsansicht einer optischen Linse in einem ersten Beispiel,
- Fig. 2: eine schematische Querschnittsansicht einer optischen Linse in einem zweiten Beispiel,
- Fig. 3: eine schematische Querschnittsansicht einer optischen Linse in einem dritten Beispiel,
- Fig. 4: eine schematische Querschnittsansicht einer optischen Linse in einem vierten Beispiel, und
- Fig. 5: eine schematisches Ablaufdiagramm einer erfindungsgemäßen Verfahrens in einer bevorzugten Ausführungsform.

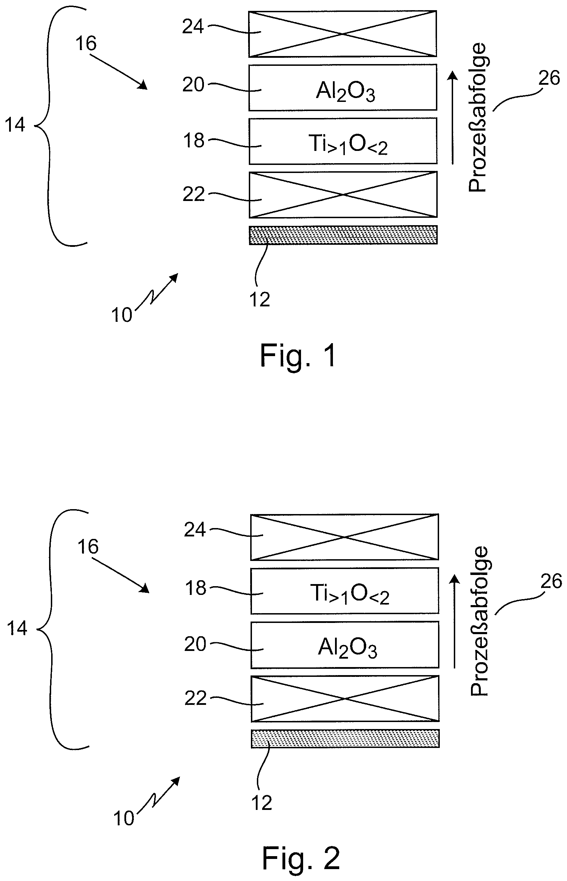

Fig. 1 zeigt eine optische Linse 10 in einem Beispiel. Die optische Linse 10 weist ein Linsenelement 12 auf, das mit einer Beschichtung 14 versehen ist. Die Beschichtung 14 weist mehrere Schichten 16 auf, die aufeinanderfolgend aufgebracht werden.

Insbesondere weist die Beschichtung 14 eine erste Schicht 18 auf, die aus Titanoxid (TiO₂) in einem unterstöchiometrischen Verhältnis gebildet ist. Der Begriff "unterstöchiometrisch" bezeichnet dabei, dass ein Sauerstoffmangel vorherrscht, die Zusammensetzung ergibt sich daher zu Ti_{>1}O_{<2}. Auf dieser ist eine zweite Schicht 20, die aus Aluminiumoxid (Al₂O₃) hergestellt ist, bereitgestellt. Die unterstöchiometrische erste Schicht 18 und die zweite Schicht 20 bilden gemeinsam eine leitfähige Grenzschicht aus, die aufgrund ihrer Leitfähigkeit eine antistatische Wirkung in die optische Linse 10 integriert.

Die Anordnung der ersten Schicht 18 und der zweiten Schicht 20 innerhalb der Beschichtung 14 muss nicht zwingend an einer Oberfläche der Beschichtung 14 sein. Zwischen der ersten Schicht 18 bzw. der zweiten Schicht 20 und dem Linsenelement 12 können untere Schichten 22 vorgesehen sein, die beispielsweise eine weitere Entspiegelungswirkung bereitstellen. Oberhalb der ersten Schicht 18 bzw. der zweiten Schicht 20 können weitere obere Schichten 24 vorgesehen sein, beispielsweise eine superhydrophobe Abschlussschicht (nicht dargestellt).

Die Bezeichnungen "oben" bzw. "unten" bzw. "nach" bzw. "vor" beziehen sich dabei auf eine Prozessabfolge 26. Die mehreren Schichten 16 der Beschichtung 14 werden aufeinanderfolgend auf das Linsenelement 12 aufgetragen. Entsprechend bildet das Linsenelement 12 einen unteren Abschluss. Eine nachfolgend aufgetragene Schicht der mehreren Schichten 16 befindet sich somit weiter entfernt von dem Linsenelement 12 und damit weiter oben als früher aufgetragene Schichten der mehreren Schichten 16.

In dem dargestellten Beispiel wird folglich die antistatische Wirkung durch zwei aneinander angrenzende Schichten, nämlich die erste Schicht 18 und die zweite Schicht 20, bereitgestellt, wobei eine der zwei aneinander angrenzenden Schichten unterstöchiometrisch gebildet ist, nämlich die erste Schicht 18.

In Fig. 2 ist ein weiteres Beispiel dargestellt. Fig. 2 zeigt ebenfalls eine optische Linse 10, die ein Linsenelement 12 mit einer Beschichtung 14 aufweist. Ebenfalls umfasst die Beschichtung mehrere Schichten 16. In der in Fig. 2 dargestellten Ausführungsform sind die erste Schicht 18 und die zweite Schicht 20 in umgekehrter Reihenfolge aufgetragen. Dabei ist zunächst die aus Al₂O₃ hergestellte zweite Schicht 20 und darauffolgend die aus TiO₂ in unterstöchiometrischem Verhältnis hergestellte erste Schicht 18 aufgetragen.

Auch dieses Beispiel bildet zwischen der ersten Schicht 18 und der zweiten Schicht 20 eine leitfähige Grenzschicht, so dass eine antistatische Wirkung bereitgestellt ist. Vorteilhafterweise sind die verwendeten Materialien auch üblich zur Bereitstellung einer Beschichtung mit entspiegelnder Wirkung, so dass die antistatische Wirkung auf einfache Weise in eine Entspiegelungsbeschichtung eines Linsenelements 12 integriert werden kann.

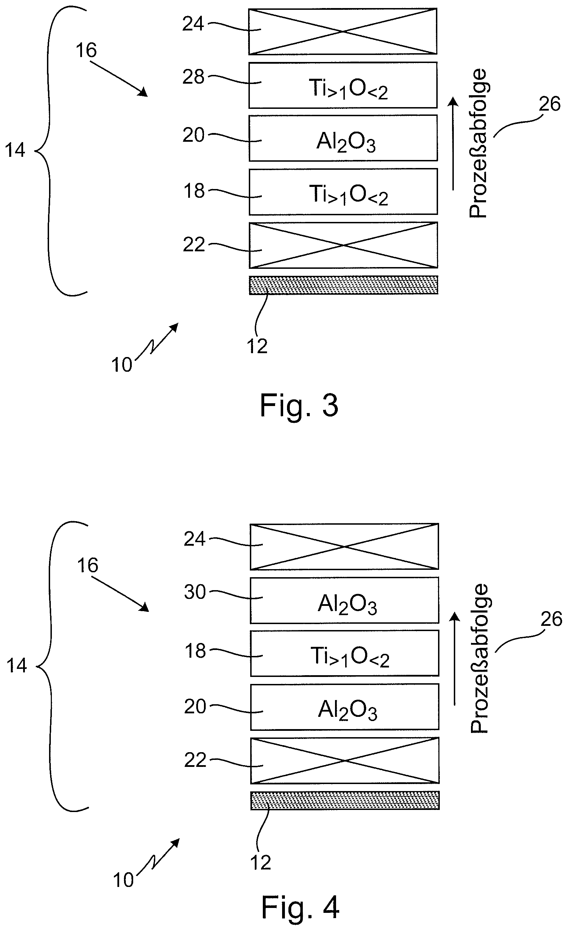

Fig. 3 zeigt ein weiteres Beispiel. Das in Fig. 3 dargestellte Beispiel entspricht im Wesentlichen dem in Fig. 1 dargestellten Beispiel, gleiche Elemente werden daher mit gleichen Bezugszeichen bezeichnet und im Folgenden wird lediglich auf die Unterschiede eingegangen.

In dem Beispiel in Fig. 3 ist eine dritte Schicht 28, die ebenfalls aus TiO₂ in einem unterstöchiometrischen Verhältnis gebildet ist, auf die zweite Schicht aufgetragen. Folglich bilden sowohl die erste Schicht 18 und die zweite Schicht 20 als auch die zweite Schicht 20 und die dritte Schicht 28 eine leitfähige Grenzschicht aus, so dass die antistatische Wirkung der gesamten Beschichtung 14 verbessert ist.

Fig. 4 zeigt noch ein weiteres Beispiel. Die Ausführungsform in Fig. 4 entspricht im Wesentlichen der in Fig. 2 dargestellten Ausführungsform, so dass gleiche Elemente mit gleichen Bezugszeichen gekennzeichnet sind. Im Folgenden wird lediglich auf die Unterschiede eingegangen.

In dem in Fig. 4 dargestellten Beispiel ist auf die erste Schicht 18, die aus TiO₂ in einem unterstöchiometrischen Verhältnis bereitgestellt ist, eine vierte Schicht 30 aus Al₂O₃ aufgebracht. Dabei ist darauf zu achten, dass die vierte Schicht 30 ohne zusätzlichen Sauerstoff aufgebracht wird, damit die erste Schicht 18 nicht in ein stöchiometrisches Verhältnis zurückkehrt. Erneut wird sowohl zwischen der ersten Schicht 18 und der zweiten Schicht 20 als auch der ersten Schicht 18 und der vierten Schicht 30 eine leitfähige Grenzschicht ausgebildet und die antistatische Wirkung der Beschichtung 14 erhöht.

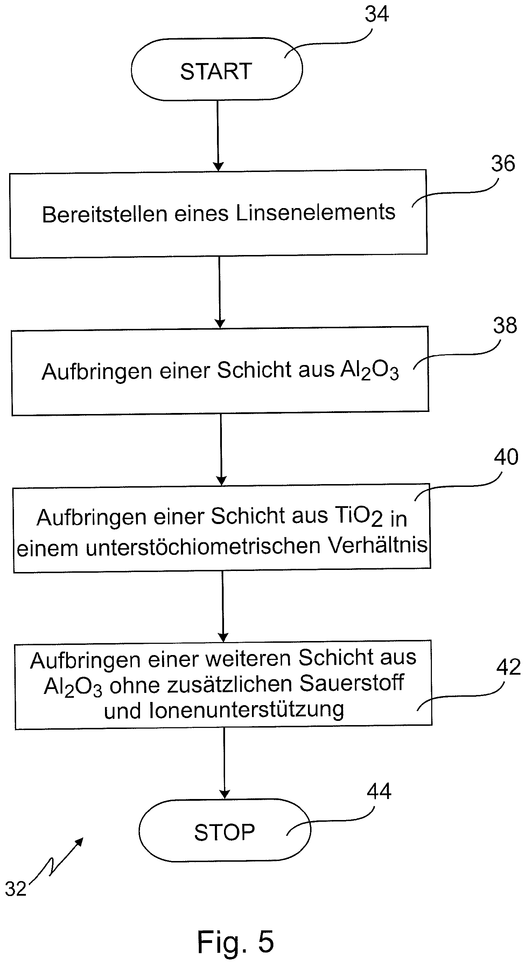

Fig. 5 zeigt eine bevorzugte Ausführungsform eines Verfahrens 32.

Das Verfahren 32 beginnt in einem Startschritt 34, worauf zunächst in einem Schritt 36 ein Linsenelement 12 bereitgestellt wird.

Darauffolgend wird in einem Schritt 38 eine Schicht aus Al₂O₃ aufgebracht. Dieses kann mittels einem der eingangs genannten PVD-, IBAD-, CVD-, PECVD- oder PICVD-Verfahren erfolgen. Diese Verfahren sind dem Fachmann grundsätzlich bekannt.

Zwischen den Schritten 36 und 38 können grundsätzlich auch andere Schichten auf das Linsenelement aufgebracht worden sein.

Die in Schritt 38 aufgebrachte Schicht aus Al₂O₃ bildet dann die zweite Schicht 20 aus.

Direkt auf die in Schritt 38 aufgebrachte zweite Schicht 20 wird dann in einem Schritt 40 eine Schicht aus TiO₂ in einem unterstöchiometrischen Verhältnis aufgebracht.

Ein solches unterstöchiometrisches Aufbringen kann beispielsweise mittels eines wie folgt ausgestalteten PVD-Verfahren erfolgen. Eine typische Beschichtungsanlage kann beispielsweise die "Box Coater 1200 DLF" von der Firma Satisloh sein. Als Ausgangssubstanz wird Ti₃O₅ verwendet. Die Aufbringungsrate liegt bei etwa 0,4 nm/sec. Sie erfolgt im Ionenquellenbetrieb mit einer END-Hall-Ionenquelle Mark II+ mit 160 Volt Entladungsspannung und 2 Ampere Entladungsstrom. Zusätzlich wird bei der Bedampfung 30 sccm O₂ (sccm = Standardkubikzentimeter pro Minute, entspricht 1 ccm Gasvolumen pro Minute bei Normbedingungen, d.h. Druck 101325 Pa, Temperatur 0 °C) mit eingelassen. Zur Erzielung der unterstöchiometrischen Ti_{>1}O_{<2}-Schicht wird insgesamt weniger als 40 sccm O₂ in den Beschichtungsraum mit hinzugegeben.

Die im Schritt 40 aufgebrachte Schicht ist dann die erste Schicht 18.

Darauffolgend wird eine weitere Schicht aus Al₂O₃ ohne zusätzlichen Sauerstoff und Ionenunterstützung in einem Schritt 42 auf die erste Schicht 18 aufgebracht. Man erhält somit eine Beschichtung, wie sie in Fig. 4 dargestellt ist, die neben ihren Entspiegelungseigenschaften zudem eine antistatische Wirkung aufweist und besonders einfach ohne hohe Mehrkosten zu erzeugen ist.

Letztlich endet das Verfahren in einem Schritt 44 und kann anschließend erneut beginnen.

## Patentansprüche

1. Verfahren zur Erzeugung einer mehrere Schichten (16) aufweisenden antistatischen Beschichtung (14) für ein Linsenelement (12), mit den folgenden Schritten:
Aufbringen von zwei aneinander angrenzenden Schichten (18, 20), wobei die antistatische Wirkung durch die zwei aneinander angrenzenden Schichten (18, 20) bereitgestellt ist, wobei zumindest eine der zwei aneinander angrenzenden Schichten (18, 20) unterstöchiometrisch gebildet wird, **dadurch gekennzeichnet, dass** die zwei aneinander angrenzenden Schichten (18, 20) durch eine erste Schicht (18), die aus TiO₂ hergestellt ist, und eine zweite Schicht (20), die aus Al₂O₃ hergestellt ist, bereitgestellt sind, wobei die erste Schicht (18) unterstöchiometrisch mit einem Sauerstoffanteil weniger als TiO₂ gebildet wird, und wobei die erste Schicht (18) nach der zweiten Schicht (20) aufgebracht wird, wobei die erste Schicht (18) mit einem Sauerstoffanteil von mehr als TiO_{1,66} gebildet wird, wobei eine dritte Schicht (30), die aus Al₂O₃ hergestellt ist, auf die erste Schicht (18) aufgebracht wird, und wobei die dritte Schicht (30) ohne zusätzlichen Sauerstoff und ohne Ionenunterstützung aufgebracht wird.

2. Verfahren nach Anspruch 1, **dadurch gekennzeichnet, dass** die erste Schicht (18) mit einem Sauerstoffanteil von weniger als TiO_{1,95} gebildet wird.

## Claims

1. Method for producing an antistatic coating (14) having a plurality of layers (16) for a lens element (12), comprising the following steps:
applying two layers (18, 20) that adjoin one another, wherein the antistatic effect is provided by the two layers (18, 20) that adjoin one another, wherein at least one of the two layers (18, 20) that adjoin one another is formed substoichiometrically, **characterized in that** the two layers (18, 20) that adjoin one another are provided by a first layer (18), which is produced from TiO₂, and a second layer (20), which is produced from Al₂O₃, wherein the first layer (18) is formed substoichiometrically with an oxygen level of less than TiO₂, and wherein the first layer (18) is applied after the second layer (20), wherein the first layer (18) is formed with an oxygen level of more than TiO_{1.66}, wherein a third layer (30), which is produced from Al₂O₃, is applied to the first layer (18), and wherein the third layer (30) is applied without additional oxygen and without ion assistance.

2. Method according to Claim 1, **characterized in that** the first layer (18) is formed with an oxygen level of less than TiO_{1.95}.

## Revendications

1. Procédé de formation d'un revêtement antistatique (14) présentant plusieurs couches (16) pour un élément de lentille (12), le procédé présentant l'étape suivante :
application de deux couches (18, 20) mutuellement adjacentes, l'effet antistatique étant exercé par les deux couches (18, 20) mutuellement adjacentes,
au moins l'une des deux couches (18, 20) mutuellement adjacentes étant formée en conditions sous-stoechiométriques,
**caractérisé en ce que**
les deux couches (18, 20) mutuellement adjacentes sont formées par une première couche (18) réalisée en TiO₂ et une deuxième couche (20) réalisée en Al₂O₃,
**en ce que** la première couche (18) est formée en conditions sous-stoechiométriques avec une teneur en oxygène inférieure à celle de TiO₂,
**en ce que** la première couche (18) étant appliquée après la deuxième couche (20),
**en ce que** la première couche (18) est formée à une teneur en oxygène supérieure à celle de TiO_{1,66} et
**en ce qu'**une troisième couche (30) réalisée en Al₂O₃ est appliquée sur la première couche (18), la troisième couche (30) étant appliquée sans oxygène supplémentaire et sans soutien ionique.

2. Procédé selon la revendication 1, **caractérisé en ce que** la première couche (18) est formée à une teneur en oxygène inférieure à celle de TiO_{1,95}.
